# EUROPÄISCHE PATENTSCHRIFT

(11) **EP 0 632 240 B1**
(45) Veröffentlichungstag und Bekanntmachung des Hinweises auf die Patenterteilung: **14.10.1998**
(21) Anmeldenummer: 94107031.0
(22) Anmeldetag: 05.05.1994
(51) Int. Cl.: F25D 17/04, F25D 16/00, A23L 3/3445, A23B 7/148

(54) **Kühl- und Befeuchtungsvorrichtung für Kühlräume**
Cooling and humidification device for cold rooms
Dispositif de refroidissement et d'humidification pour des chambres froides

(30) Priorität: 01.07.1993 DE 4321931
(43) Veröffentlichungstag der Anmeldung: 04.01.1995
(73) Patentinhaber: De Vries, Hubert, D-70771 Leinfelden-Unteraichen (DE)
(72) Erfinder: De Vries, Hubert, D-70771 Leinfelden-Unteraichen (DE)
(74) Vertreter: Vetter, Hans, Dipl.-Phys. Dr.

(56) Entgegenhaltungen:
- DE-A- 4 024 276
- FR-A- 2 441 812
- GB-A- 1 126 738

## Beschreibung

Die Erfindung betrifft eine Kühl- und Befeuchtungsvorrichtung für Kühlräume gemäß dem Oberbegriff des Anspruchs 1. Eine derartige Vorrichtung dient insbesondere zur Kühlung und Befeuchtung von Blumen, Gemüse, Obst, Käse, o.dgl. in einem Kühlraum und ist beispielsweise aus der DE 40 24 276 Al bekannt. Dort sind zwei getrennte Vorrichtungen in separaten Räumen vorgesehen, wobei die eine Vorrichtung mit einer Sprühvorrichtung versehene Verdampferelemente und eine darunter angeordnete Wasserauffangwanne und die andere Vorrichtung einen in einem Wasserbehälter angeordneten Wärmetauscher und eine Kompressor-Kältemaschine enthält. Die bekannte Anordnung beansprucht durch die beiden separaten Vorrichtungen viel Platz, und es sind eine Vielzahl von Verbindungsleitungen erforderlich, insbesondere sind zwei Wasserpumpen und zwei separate Wasserleitungen erforderlich. Weiterhin sind aus der GB 1,126,738 und aus der Zeitschrift "Gemüse 10/1986, S. 392 ff" Kühl- und Befeuchtungsvorrichtungen bekannt, bei denen das auf die Verdampferelemente gesprühte und von diesen heruntertropfende Wasser in einer Wasserauffangwanne gesammelt und von dort direkt wieder zur Sprühvorrichtung gepumpt wird. Eine Vorkühlung des Wassers, beispielsweise durch billigeren Nachtstrom ist dadurch nicht möglich. Schließlich ist aus der genannten Zeitschrift "Gemüse 10/1986" noch eine Kühl- und Befeuchtungsvorrichtung bekannt, bei der zwar das zu versprühende Wasser vorgekühlt werden kann, jedoch wird dieses Wasser direkt in den Gebläse-Luftstrom versprüht, ohne daß Verdampferelemente vorgesehen wären. Darüberhinaus ist diese Vorrichtung in zwei separate Einrichtungen aufgeteilt, so daß auch hier wiederum ein größerer Platzbedarf und viele Verbindungsleitungen erforderlich sind.

Eine Aufgabe der vorliegenden Erfindung besteht daher darin, eine Kühl- und Befeuchtungsvorrichtung der eingangs genannten Gattung zu schaffen, durch die eine effektive Kühlung und Befeuchtung durch Vorkühlung des zu versprühenden Wassers bei gleichzeitig geringerem Platzbedarf und kompakterer Anordnung möglich ist. Dabei soll die Zahl der Verbindungsleitungen so weit wie möglich reduziert werden.

Diese Aufgabe wird erfindungsgemäß durch die Merkmale des Anspruchs 1 gelöst.

Hierdurch kann die gesamte Vorrichtung in einem einzigen Gehäuse untergebracht werden, wobei das auf die Verdampferelemente aufgesprühte Wasser direkt in den mit dem Wärmetauscher versehenen Wasserbehälter tropft. Um dieses Wasser wieder der Sprühvorrichtung zuzuführen, ist daher lediglich eine einzige Wasserleitung und eine einzige Pumpe erforderlich. Da die Verdampferelemente und der Wärmetauscher in einem Gehäuse untergebracht sind, kann die Kompressor-Kältemaschine direkt daneben angeordnet oder ebenfalls in diesem einzigen Gehäuse integriert sein, so daß die Verbindungsleitungen für das Kältemittel sehr kurz werden. Insgesamt wird daher eine kostengünstige kleinvolumige und kompakte Anordnung erreicht.

Durch die in den Unteransprüchen aufgeführten Maßnahmen sind vorteilhafte Weiterbildungen und Verbesserungen der im Anspruch 1 angegebenen Kühl- und Befeuchtungsvorrichtung möglich.

Das Gehäuse weist zwischen dem oberen, die Verdampferelemente enthaltenden Bereich und dem unteren, den Wärmetauscher enthaltenden Bereich zweckmäßigerweise einen mittleren, das von oben herabrieselnde Sprühwasser direkt durchlassenden Bereich auf. Dieser mittlere Bereich des Gehäuses ist dabei in vorteilhafter Weise als Luftansaugbereich ausgebildet, so daß das herunterrieselnde Wasser und die befeuchteten Verdampferelemente vom Gebläse-Luftstrom entgegengesetzt zur Rieselrichtung durchströmt werden. Die Luft kann dadurch sehr schnell und effektiv abgekühlt werden, wodurch auch hohe Einbringtemperaturen der zu kühlenden und zu befeuchtenden Ware möglich sind. Der Luftansaugbereich ist zur Erzeugung des Luftstromes dabei an wenigstens einer Seite mit wenigstens einem Ansauggebläse versehen, das insbesondere eine den Luftstrom nach oben richtende Neigung aufweist.

Oberhalb der Verdampferelemente weist das Gehäuse Luftaustrittsöffnungen für den Gebläse-Luftstrom auf, der dadurch erst nach vollständiger Durchströmung der Verdampferelemente nach außen gelangen kann.

Der Wasserbehälter ist zweckmäßigerweise mit einer Niveauregeleinrichtung für das Wasser versehen.

In vorteilhafter Weise ist ein den Wärmetauscher während der Nacht bis zur Eisbildung betreibende Nachtstromsteuerung vorgesehen. Hierdurch kann kostengünstig durch den verbilligten Nachtstrom im Wasserbehälter Eis erzeugt werden, so daß dann im Tagbetrieb der Wärmetauscher bis zum Abtauen des Eises nicht mehr in Betrieb genommen werden muß.

Die Verdampferelemente und der Wärmetauscher sind als von einem Kühlmittel durchströmte Platten ausgebildet, die zum einen eine große Kontaktfläche für den Wärmeübergang zum Gebläse-Luftstrom und zum anderen eine große Kontaktfläche zum Wasser des Wasserbehälters aufweisen. Hierdurch wird ein sehr guter Wärmeübergang erreicht, der eine kleinere Dimensionierung der gesamten Anlage gestattet. Die Platten sind dabei vertikal und parallel zueinander ausgerichtet.

Ein Ausführungsbeispiel der Erfindung ist in der Zeichnung dargestellt und in der nachfolgenden Beschreibung näher erläutert. Es zeigen:
- Figur 1: das Ausführungsbeispiel der Kühl- und Befeuchtungsvorrichtung in einer Seitenansicht und
- Figur 2: die selbe Kühl- und Befeuchtungsvorrichtung in einer perspektivischen Ansicht.

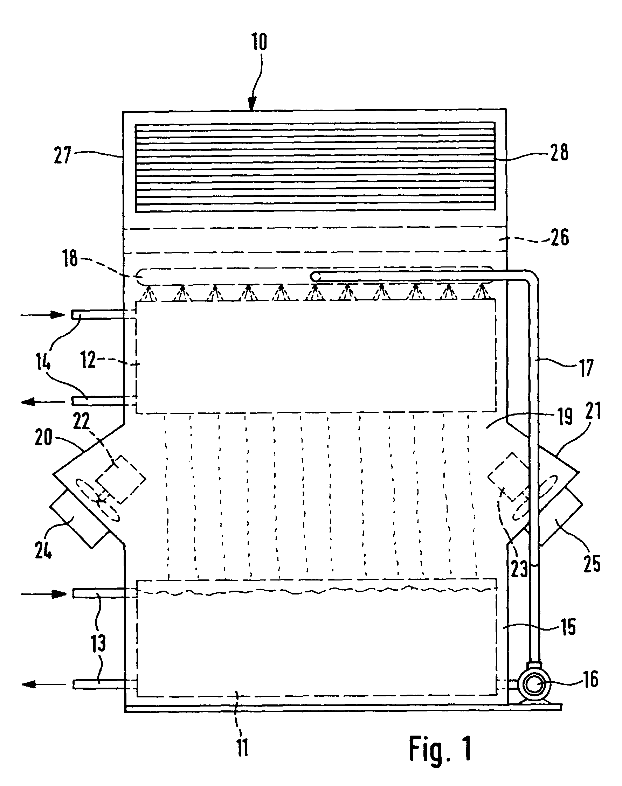

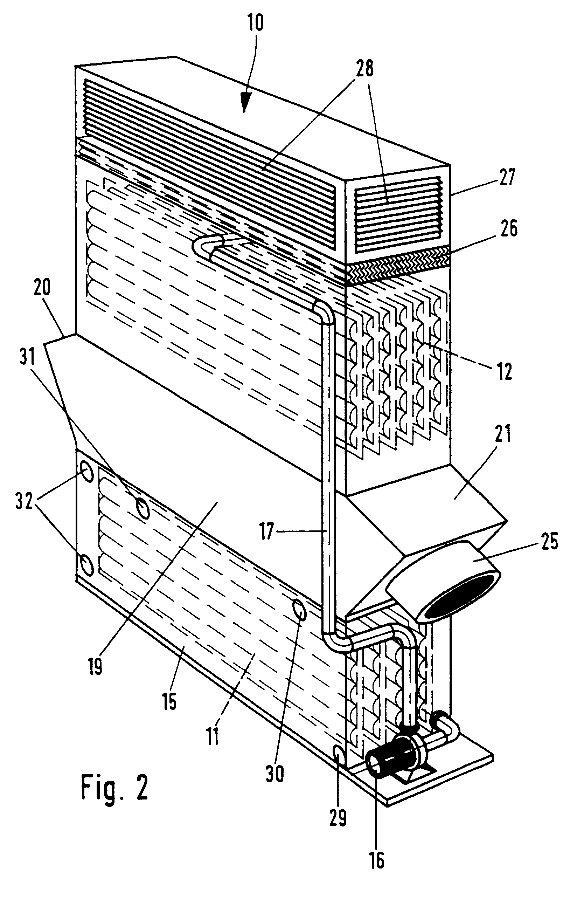

Bei dem in den Figuren 1 und 2 dargestellten Ausführungsbeispiel einer Kühl- und Befeuchtungsvorrichtung für Kühlräume zur Kühlung von Waren wie Blumen, Gemüse, Obst, Käse o.dgl. befinden sich in einem gemeinsamen Gehäuse 10 im unteren Bereich ein Wärmetauscher 11 und im oberen Bereich Verdampferelemente 12. Sowohl der Wärmetauscher 11, wie auch die Verdampferelemente 12 bestehen im wesentlichen aus parallelen, vertikal angeordneten Platten, die eine gewellte Struktur aufweisen, so daß sich horizontale Kanäle für eine Kühlflüssigkeit, wie Ammoniak, Frigen, o.dgl. über die gesamte Fläche der Platten verteilt bilden. Hierdurch erfolgt gleichzeitig eine Vergrößerung der wirksamen äußeren Wärmeübergangsfläche. Dies kann durch zusätzliche, nicht näher dargestellte Strukturierungen der Platten noch verstärkt werden. Der Wärmetauscher 11 ist über Leitungen 13 und die Verdampferelemente 12 sind über Leitungen 14 mit einer nicht näher dargestellten Kompressor-Kältemaschine verbunden, um das Kältemittel zu kühlen. Hierzu ist eine einzige Kompressor-Kältemaschine ausreichend, wobei jedoch die Leitungen 13 einerseits und die Leitungen 14 andererseits unabhängig voneinander gesteuert werden können. Die nicht dargestellte Kompressor-Kältemaschine ist direkt neben dem Gehäuse 10 aufgestellt oder in diesem integriert.

Der untere, den Wärmetauscher 11 enthaltende Bereich des Gehäuses 10 ist als Wasserbehälter 15 ausgebildet, wobei der Wärmetauscher 11 gemäß Figur 1 nahezu vollständig in das im Wasserbehälter 15 enthaltende Wasser eintaucht. Durch eine Pumpe 16 und eine Wasserleitung 17 wird das Wasser aus dem Wasserbehälter 15 zu einer Sprühvorrichtung 18 oberhalb der Verdampferelemente 12 gepumpt, die in nicht näher dargestellter Weise aus mehreren parallelen Sprührohren mit nach unten geöffneten Sprühdüsen besteht. Diese Sprühvorrichtung 18 dient zum Besprühen der Verdampferelemente 12 mit kaltem Wasser. Dabei sind diese Sprührohre jeweils so angeordnet, daß die Sprühstrahlen in den Zwischenraum zwischen den Verdampferelementen 12 gelangen können. Das versprühte Wasser rieselt dadurch zum Teil an den Verdampferelementen 12 herab und hält diese feucht und bildet zum anderen einen Gegenstrom zu einem von unten kommenden Gebläse-Luftstrom, der in einem mittleren Luftansaugbereich 19 des Gehäuses 10 erzeugt wird. Hierzu weist dieser Luftansaugbereich 19 zu den Schmalseiten hin zwei prismenartige Vorsprünge 20, 21 auf, in denen jeweils ein Gebläse 22, 23 mit schräg nach oben gerichteter Gebläserichtung angeordnet ist. Ansaugluftfilter 24, 25 schützen vor angesaugten Partikeln und Verunreinigungen.

Oberhalb der Verdampferelemente 12 ist ein Tropfenabscheider 26 und darüber ein Luftaustrittsbereich 27 angeordnet, aus dem die gekühlte und befeuchtete Luft über Austrittsschlitze 28 nach allen vier Richtungen austreten kann.

Der Wasserbehälter 15 weist eine Entleerungsöffnung 29 an seinem unteren Bereich auf, über die das Wasser mittels eines nicht dargestellten Ablaßventiles abgelassen werden kann. Weiterhin ist ein Überlauf 30 am oberen Bereich vorgesehen, über den das Wasser in ein nicht dargestelltes Überlaufrohr gelangen kann, wenn der Wasserpegel zu stark ansteigt. Zusätzliches Wasser kann über eine Füllöffnung 31 und ein ebenfalls nicht dargestelltes Nachfüllventil nachgefüllt werden. Schließlich ist noch eine Niveauregeleinrichtung 32 vorgesehen, um wenigstens ein oberes und ein unteres Wasserniveau einregeln zu können.

Im Normalbetrieb wird das sich in einem Kreislauf bewegende Wasser im Wasserbehälter 15 durch den Wärmetauscher 11 gekühlt und gelangt so zum Tropfenabscheider 26. Das kalte, von oben kommende Sprühwasser befeuchtet zum einen die ebenfalls gekühlten Verdampferelemente 12, wodurch eine weitere Kühlung erreicht wird. Der von unten kommende Luftstrom durchströmt die parallelen Platten der Verdampferelemente 12 und bildet einen Gegenstrom zum von oben kommenden versprühten kalten Wasser. Hierdurch wird der Luftstrom stark gekühlt und befeuchtet, wobei eine Luftfeuchte bis zu 100% erreicht werden kann. Das herabrieselnde Wasser gelangt dann automatisch wieder in den Wasserbehälter 15. Nach einem schnellen Abkühlen des Kühlraumes nach dem Einbringen frischer Ware kann dann die Kühlung durch den Wärmetauscher 11 eingestellt werden, d.h., der Wärmetauscher 11 braucht dann nicht mehr durch die Kompressor-Kältemaschine gekühlt werden. Um Energie zu sparen kann nachts mit billigem Heizstrom der Wärmetauscher 11 sehr stark gekühlt werden, so daß sich im Wasserbehälter 15 Eis bildet, das als Kältespeicher für den Tag dient. Um den Raum bei Nacht nicht zu sehr zu unterkühlen, kann die Leistung der Pumpe 16 und/oder die Kühlleistung für die Verdampferelemente 12 nach Bedarf heruntergefahren werden.

Die beschriebene Kühl- und Befeuchtungsvorrichtung kann selbstverständlich in seiner Ausführung variiert werden. So kann die Zahl der Gebläse 22, 23 variieren, d.h., bei sehr großen Vorrichtungen können weitere derartige Gebläse auch an den übrigen Seiten angeordnet sein. Zur Bildung und/oder zur Erzeugung eines nach oben gerichteten Luftstromes können zusätzliche, nicht dargestellte Luftleitbleche vorgesehen sein, wobei dann auch im Einzelfall die geneigte Anordnung der Gebläse 22, 23 entfallen kann. Diese sind dann wie im eingangs angegebenen Stand der Technik angeordnet.

## Patentansprüche

1. Kühl- und Befeuchtungsvorrichtung für Kühlräume, mit in einem Gebläse-Luftstrom angeordneten, als vertikale und parallel zueinander ausgerichtete Platten ausgebildeten Verdampferelementen (12), mit einer unterhalb der Verdampferelemente angeordneten Wasserauffangwanne (15), mit einer Wasser aus einem mit einem Wärmetauscher (11) versehenen und zur Eisbildung vorgesehenen Wasserbehälter zu einer die Verdampferelemente mit Wasser besprühenden Sprühvorrichtung (18) pumpenden Pumpe (16), und mit einer mit den Verdampferelementen und dem Wärmetauscher verbundenen Kompressor-Kältemaschine, durch die die Verdampferelemente und d r Wärmetauscher unabhängig voneinander mit einem Kühlmittel beaufschlagbar sind, dadurch gekennzeichnet, daß in einem einzigen Gehäuse (10) der Wärmetauscher (11) unterhalb der Verdampferelemente (12) in der als Wasserbehälter (15) ausgebildeten Wasserauffangwanne angeordnet ist, wobei auch der Wärmetauscher (11) als von dem Kühlmittel durchströmte Platten ausgebildet ist, die jeweils vertikal und parallel zueinander ausgerichtet sind, und wobei die Kompressor-Kältemaschine im Gehäuse (10) integriert oder direkt neben diesem angeordnet ist.

2. Vorrichtung nach Anspruch 1, dadurch gekennzeichnet, daß das Gehäuse (10) zwischen dem oberen, die Verdampferelemente (12) enthaltenden Bereich und dem unteren, den Wärmetauscher (11) enthaltenden Bereich einen mittleren, das von oben herabrieselnde Sprühwasser durchlassenden Bereich (19) aufweist.

3. Vorrichtung nach Anspruch 2, dadurch gekennzeichnet, daß der mittlere Bereich (19) des Gehäuses (10) als Luftansaugbereich ausgebildet ist.

4. Vorrichtung nach Anspruch 3, dadurch gekennzeichnet, daß der als Luftansaugbereich ausgebildete Bereich (19) an wenigstens einer Seite mit wenigstens einem Ansauggebläse (22, 23) versehen ist.

5. Vorrichtung nach Anspruch 4, dadurch gekennzeichnet, daß das wenigstens eine Gebläse (22, 23) eine den Luftstrom nach oben richtende Neigung aufweist.

6. Vorrichtung nach einem der vorhergehenden Ansprüche, dadurch gekennzeichnet, daß das Gehäuse (10) oberhalb der Verdampferelemente (12) Luftaustrittsöffnungen (28) für den Gebläse-Luftstrom aufweist.

7. Vorrichtung nach einem der vorhergehenden Ansprüche, dadurch gekennzeichnet, daß eine einzige Pumpe (16) zum Pumpen des Wassers aus dem Wasserbehälter (15) zur Sprühvorrichtung (18) vorgesehen ist.

8. Vorrichtung nach einem der vorhergehenden Ansprüche, dadurch gekennzeichnet, daß der Wasserbehälter (15) mit einer Niveauregeleinrichtung (32) für das Wasser versehen ist.

9. Vorrichtung nach einem der vorhergehenden Ansprüche, dadurch gekennzeichnet, daß eine den Wärmetauscher während der Nacht bis zur Eisbildung betreibende Nachtstromsteuerung vorgesehen ist.

## Claims

1. Refrigeration and humidifier unit for refrigerated chambers, with evaporator elements (12) in the form of vertical panels aligned parallel to one another, with a water collection tank (15) arranged below the evaporator elements, with a pump (16) for pumping water from a water reservoir provided with a heat exchanger (11) and intended for ice-making, to a spraying device (18) which sprays the evaporator elements with water, and with a refrigerating machine compressor connected to the evaporator elements and the heat exchanger, through which the evaporator elements and the heat exchanger may be supplied with a coolant independently of one another, characterized in that in a single housing (10) the heat exchanger (11) is mounted beneath the evaporator elements (12) in the water collection tank in the form of a water reservoir (15), wherein the heat exchanger (11) is also formed of panels through which coolant flows and which are aligned vertically and parallel to one another, and wherein the refrigerating machine compressor is integrated in the housing (10) or is mounted directly adjacent to it.

2. Unit according to claim 1, characterized in that the housing (10) has a central zone (19) allowing spray water to trickle down from above, between the upper zone containing the evaporator elements (12) and the lower zone containing the heat exchanger (11).

3. Unit according to claim 2, characterized in that the central zone (19) of the housing (10) is designed as the air-intake zone.

4. Unit according to claim 3, characterized in that the zone (19) designed as the air-intake zone is provided with one or more intake fans (22, 23) on one or more sides.

5. Unit according to claim 4, characterized in that the fan or fans (22, 23) are at an angle which directs the airflow upwards.

6. Unit according to any of the preceding claims, characterized in that the housing (10) has air outlet vents (28) above the evaporator elements (12), for the fan airflow .

7. Unit according to any of the preceding claims, characterized in that a single pump (16) is provided to pump the water from the water reservoir (15) to the spraying device (18).

8. Unit according to any of the preceding claims, characterized in that the water reservoir (15) is provided with a level control device (32) for the water.

9. Unit according to any of the preceding claims, characterized in that a night current control unit, which operates the heat exchanger during the night until ice is formed, is provided.

## Revendications

1. Dispositif de refroidissement et d'humidification pour chambres froides, comprenant des éléments évaporateurs (12) placés dans un courant d'air soufflé, conformés en plaques verticales et orientées parallèlement les unes aux autres, une cuve collectrice d'eau (15) située sous les éléments évaporateurs, une pompe (16) pompant l'eau hors d'un récipient d'eau équipé d'un échangeur de chaleur et prévu pour former de la glace, pour l'envoyer vers un dispositif de vaporisation (18) vaporisant les éléments évaporateurs avec de l'eau, et comportant un compresseur frigorifique relié aux éléments évaporateurs et à l'échangeur de chaleur, au moyen duquel les éléments évaporateurs et l'échangeur de chaleur peuvent être alimentés, indépendamment les uns des autres, avec un moyen de refroidissement, caractérisé en ce que, dans un seul boîtier (10), l'échangeur de chaleur (11) est placé sous les éléments évaporateurs (12), dans la cuve collectrice d'eau conformée en récipient d'eau (15), l'échangeur de chaleur (11) étant également conformé en plaques traversées par le moyen de refroidissement, qui sont, chacune, verticales et orientées parallèlement les unes aux autres, et le compresseur frigorifique étant intégré dans le boîtier (10) ou étant monté immédiatement à côté de celui-ci.

2. Dispositif selon la revendication 1, caractérisé en ce que le boîtier (10), entre la zone supérieure contenant les éléments évaporateurs (12), et la zone inférieure, contenant l'échangeur de chaleur (11), présente une zone médiane (19), laissant passer l'eau vaporisée qui ruisselle vers le bas.

3. Dispositif selon la revendication 2, caractérisé en ce que la zone médiane (19) du boîtier est conformée en zone d'aspiration de l'air.

4. Dispositif selon la revendication 3, caractérisé en ce que la zone médiane (19), conformée en zone d'aspiration de l'air, est pourvue, au moins d'un côté, d'au moins un ventilateur d'aspiration (22, 23).

5. Dispositif selon la revendication 4, caractérisé en ce que le ventilateur (22, 23), au nombre minimum d'un, présente une inclinaison orientant le courant d'air vers le haut.

6. Dispositif selon l'une des revendications précédentes, caractérisé en ce que le boîtier (10), au-dessus des éléments évaporateurs (12), présente des ouvertures de sortie de l'air (28) destinées au courant d'air soufflé.

7. Dispositif selon l'une des revendications précédentes, caractérisé en ce qu'est prévue une seule pompe (16) pour pomper l'eau hors du récipient d'eau (15), en direction du dispositif de vaporisation (18).

8. Dispositif selon l'une des revendications précédentes, caractérisé en ce que le récipient d'eau (15) est pourvu d'un dispositif régulateur de niveau (32) pour l'eau.

9. Dispositif selon l'une des revendications précédentes, caractérisé en ce qu'est prévue une commande fonctionnant avec du courant de nuit, qui fait fonctionner l'échangeur de chaleur, pendant la nuit, jusqu'à formation de glace.
